# FASCICULE DE BREVET EUROPEEN

(11) **EP 2 575 573 B1**
(45) Date de publication et mention de la délivrance du brevet: **08.07.2015**
(21) Numéro de dépôt: 11722782.7
(22) Date de dépôt: 23.05.2011
(51) Int. Cl.: A47J 31/46, A47J 31/36

(54) **SYSTEME DE PRODUCTION DE BOISSONS PAR INFUSION**
SYSTEM ZUR HERSTELLUNG VON GETRÄNKEN DURCH INFUSION
SYSTEM FOR MAKING BEVERAGES BY INFUSION

(30) Priorité: 25.05.2010 FR 1054008; 25.05.2010 FR 1054017
(43) Date de publication de la demande: 10.04.2013
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2011/058394
(87) Numéro de publication internationale: WO 2011/147796

(56) Documents cités:
- EP-A1- 1 219 217
- EP-A1- 1 795 095
- FR-A1- 2 844 441

## Description

La présente invention concerne un dispositif de production de boissons par infusion d'un produit sous forme de doses.

L'invention concerne plus particulièrement les machines dans lesquelles l'extraction du produit à infuser s'effectue sous pression. Tel est le cas des machines à expresso dans lesquelles du café est infusé à une pression comprise entre 8 et 20 bars et plus généralement supérieur à 10 bars. Une machine de ce type est décrite dans EP 1795095 A1.

Ces machines comprennent une chambre d'infusion destinée à recevoir le produit à infuser, une pompé pour élever la pression du fluide dans le circuit ainsi que des moyens de chauffage disposés entre la chambre d'infusion et la pompe. Ces moyens de chauffage doivent permettre d'élever la température du liquide à environ 90° C. Pour satisfaire les goûts des différents utilisateurs d'une machine à café de type expresso, il est possible d'ajouter sur cette machine une buse délivrant de l'eau chaude à pression atmosphérique afin de diluer le contenu d'une tasse de café préalablement infusé à haute pression sans en réduire la température. On parle alors « d'allonger le café ».

Compte tenu des différences de pression entre les sorties d'eau alimentant la chambre d'infusion et la buse d'eau chaude on a classiquement recours à l'utilisation de deux chaudières distinctes fonctionnant à des pressions différentes. Cette solution induit un coût de fabrication élevé. En outre elles nécessitent d'alimenter en électricité deux chaudières distinctes. Elles ne s'avèrent économiquement acceptables qu'en cas d'utilisation très intensive de la machine.

D'autres solutions prévoient une chaudière principale comportant de l'eau à pression atmosphérique et traversée par un réservoir faisant office échangeur et contenant de l'eau sous pression. Ainsi, la puissance de chauffage n'est délivrée qu'à la chaudière principale, une partie de cette puissance étant transférée à la chaudière sous pression. Cette solution présente pour inconvénient d'être relativement complexe et coûteuse. En particulier la chaudière principale à pression atmosphérique induit de fortes contraintes concernant le choix de ses matériaux et son procédé de fabrication pour assurer une bonne étanchéité.

Il existe donc un besoin consistant à proposer une machine permettant sélectivement d'alimenter une chambre d'infusion avec un fluide chauffé sous pression ou de délivrer un fluide chauffé à pression atmosphérique et offrant une structure simplifiée et tout en limitant la consommation énergétique.

A cet effet, la présente invention prévoit une machine de production de boisson par infusion d'un produit à innfuser comme definie dans la revendication 1.

Ainsi, la machine selon l'invention permet d'alimenter la chambre d'infusion avec de l'eau chaude sous pression lorsque la pompe fonctionne, que l'électrovanne de sortie est fermée permettant de ce fait au fluide de monter en pression dans le circuit hydraulique jusqu'à atteindre le seuil de pression d'infusion. Le clapet s'ouvre alors, permettant l'introduction d'eau chaude sous pression à l'intérieur de la chambre d'infusion.

La machine selon l'invention, dans une autre phase de fonctionnement, permet également de délivrer un fluide chauffé à basse pression lorsque la pompe fonctionne et que l'électrovanne de sortie est ouverte. L'ouverture de l'électrovanne de sortie empêche la montée en pression du fluide à l'intérieur du circuit. Le clapet taré ne s'ouvre alors pas et empêche l'introduction du fluide dans la chambre d'infusion.

L'invention ne comporte qu'une seule chaudière et présente une architecture particulièrement simple. Elle induit un coût de revient limité et s'avère particulièrement avantageuse même pour les machines dont l'utilisation n'est pas intensive, typiquement, les machines domestique ou semi professionnel de type machines de bureau, d'hôtel etc.

En outre, la combinaison revendiquée mettant en jeu une électrovanne et un clapet taré offre une fiabilité particulièrement élevée et présente une grande facilité d'utilisation

En outre elle présente un encombrement réduit par rapport aux solutions comprenant deux chaudières indépendantes ou deux chaudières associées formant un échangeur.

De manière facultative, la machine selon l'invention comprend en outre au moins l'une quelconque des caractéristiques suivantes dans le cadre des revendications:
- la branche de sortie est configurée pour connecter fluidiquement la chaudière en amont du clapet taré à une sortie de fluide disposée à l'air libre,
- elle est configurée de sorte que la fermeture de l'électrovanne de sortie autorise la montée en pression du fluide dans le circuit hydraulique et de sorte que l'ouverture de l'électrovanne de sortie empêche la montée en pression dans le circuit hydraulique. Ainsi, lorsque l'électrovanne de sortie est ouverte, la pression ne peut atteindre le seuil de pression d'infusion et le clapet taré ne s'ouvre pas. L'eau ne parvient alors pas dans la chambre d'infusion. La sollicitation de l'électrovanne de sortie permet ainsi soit de délivrer de l'eau sous pression à la chambre de d'infusion, soit de délivrer de l'eau à pression atmosphérique.
- la sortie de la branche de sortie est équipée d'une buse. De préférence, la buse est équipée d'un dispositif agencé pour créer un effet venturi.
- L'activation de l'électrovanne de sortie provoque le fonctionnement de la pompe, la fonctionnement de la chaudière et la fermeture d'une électrovanne de décharge préférentiellement disposée en amont de l'actionneur.
- la machine est configurée pour activer la pompe par intermittence de sorte à obtenir un jet de vapeur en sortie de la banche de sortie. Avantageusement, le jet de vapeur peut être utilisé pour réchauffer une tasse vide. Il peut également être utilisé pour chauffer du liquide comme du lait contenu dans un récipient au contact du jet ou, en collaboration avec un dispositif du type venturi connecté sur l'extrémité libre de la buse, pour faire mousser le lait afin de réaliser certaines préparation à base de café et de lait comme le cappuccino ou le macchiato.
- l'entrée de la branche de sortie est connectée au circuit hydraulique en amont du système d'infusion et en aval de la chaudière. L'entrée de la branche de sortie est connectée au circuit hydraulique en amont du système d'infusion également désigné groupe.
- la chambre d'infusion est définie par au moins une première et une deuxième portions de chambre d'infusion mobiles l'une par rapport à l'autre, dans laquelle le système d'infusion comporte un actionneur configuré pour éloigner ou rapprocher les première et deuxième portions afin de respectivement fermer ou ouvrir la chambre d'infusion, et dans laquelle l'actionneur est connecté à la pompe pour être alimenté en fluide sous pression.
- elle est configurée de sorte que l'actionneur provoque la fermeture de la chambre d'infusion lorsque la pression du fluide alimentant l'actionneur atteint un seuil de pression de fermeture. Le circuit est configuré de sorte que lorsque l'électrovanne de sortie est ouverte, la pression dans le circuit ne peut pas suffisamment s'élever pour atteindre le seuil prédéterminé de pression de fermeture.
- le circuit hydraulique comprend une électrovanne de décharge disposée en amont de l'actionneur et agencée de manière que son ouverture abaisse la pression du fluide en amont de l'actionneur. Ainsi, l'ouverture de l'électrovanne de décharge autorise la dépressurisation de l'actionneur et l'ouverture de la chambre d'infusion.
- L'électrovanne de décharge est distincte de l'électrovanne de sortie. La machine comporte donc deux électrovannes assurant chacune une fonction spécifique : écoulement d'eau chaude pour l'électrovanne de sortie et dépressurisation du système pour l'électrovanne de décharge.
- l'électrovanne de décharge est connectée à un réservoir d'eau alimentant la pompe ou à un bac de recueillement. L'eau en excès retourne donc dans le réservoir est n'est pas gaspillée. La machine évite ainsi les pertes d'eau.
- Avantageusement, l'eau qui devient en excès lors du retour du vérin à sa position de repos est de l'eau non chauffée. L'eau en excès n'est donc pas inutilement chauffée.
- la machine est configurée de sorte que l'ouverture de l'électrovanne de sortie provoque la fermeture de l'électrovanne de décharge.
- la machine est configurée de sorte que l'ouverture de l'électrovanne de décharge provoque la fermeture de l'électrovanne de sortie.
- elle configurée de manière à empêcher une montée en pression du fluide dans le circuit si l'électrovanne de décharge et/ou l'électrovanne de sortie est ouverte et de manière à autoriser la montée en pression du fluide dans le circuit si l'électrovanne de décharge et l'électrovanne de sortie sont fermées.

Les caractéristiques précédentes peuvent être exploitées avec une machine dans laquelle les alimentations de la chambre d'infusion et de l'actionneur sont communes. Le fluide sous pression issu de la chaudière actionne le vérin et pénètre dans la chambre d'infusion. Dans une variante de réalisation, la chambre d'infusion est fluidiquement connectée à la chaudière pour recevoir du fluide chauffé et dans laquelle l'actionneur n'est pas connecté à la chaudière et est alimenté en fluide non chauffé. Ainsi, l'alimentation de l'actionneur en fluide sous pression et l'alimentation de la chambre d'infusion sont séparées.
- la première portion de chambre est mobile et dans laquelle la chambre d'infusion est alimentée en fluide chauffé par la première portion de chambre.
- l'actionneur est un vérin hydraulique comprenant un cylindre et un piston mobile à l'intérieur du cylindre, le cylindre et le piston définissant une chambre de poussée alimentée en fluide par la pompe, le piston comportant un passage dont une extrémité aval est en communication fluidique avec la chambre d'infusion et dont une extrémité amont est en communication fluidique avec un canal d'alimentation destiné à être connecté à la chaudière et dans laquelle le cylindre comporte des moyens d'emmanchement solidaires du cylindre, s'étendant dans la chambre de poussée, conformés pour coulisser à l'intérieur du piston et logeant le canal d'alimentation. Ainsi, le canal d'alimentation est un pratiqué dans les moyens d'emmanchement.
- le système d'infusion est configuré pour être solidarisé de manière amovible sur un module de la machine comprenant la.pompe et la chaudière et configurée de sorte que la solidarisation du système sur ledit module de la machine provoque la mise en communication fluidique du système avec la pompe et avec la chaudière.

Selon un autre aspect qui n'est pas revendiqué un system d'infusion est décrit pour machine de production de boisson par infusion d'une dose d'un produit à infuser comprenant :
- une chambre d'infusion destinée à recevoir une dose, la chambre d'infusion étant définie par au moins une première et une deuxième portions de chambre d'infusion, les portions étant agencées pour être mutuellement éloignées ou rapprochées afin de-respectivement fermer ou ouvrir la chambre d'infusion,
- un actionneur comprenant une chambre de poussée destinée à être alimentée par un fluide sous pression et configuré pour entraîner la première portion de manière à commander au moins en partie la fermeture de la chambre d'infusion lorsque la chambre de poussée est alimentée par une pression supérieure à une pression donnée,
- le système comporte des moyens d'alimentation de la chambre d'infusion fluidiquement connectés à la première portion et destinés à être connectés à une chaudière pour alimenter la chambre en fluide chauffé,
- les moyens d'alimentation de la chambre sont fluidiquement isolés de la chambre de poussée.

Ainsi, avec cette configuration, la même portion de chambre assure l'alimentation de la chambre d'infusion et est entraînée par l'actionneur, tout en autorisant une alimentation indépendante entre la chambre d'infusion et la chambre de poussée. Cette dernière peut ainsi être alimentée en fluide non chauffé. Lors de l'ouverture de la chambre d'infusion, le retour de l'actionneur chasse ainsi de l'eau non chauffée. La consommation énergétique est alors réduite tout en limitant l'encombrement de l'ensemble.

De manière facultative, le système comprend en outre au moins l'une quelconque des caractéristiques suivantes :
- la première portion de chambre est mobile. De préférence, elle est mobile en translation. La deuxième portion de chambre est fixe.
- Le système est agencé de sorte qu'après l'infusion, la dose est évacuée hors de la chambre d'infusion par gravité.
- l'actionneur est un vérin hydraulique comprenant un cylindre et un piston mobile à l'intérieur du cylindre, la chambre de poussée étant définie par l'espace formé entre le cylindre et le piston.
- le vérin comprend des moyens de rappel et le vérin est agencé de sorte que l'introduction d'un fluide sous pression dans la chambre de poussée provoque le déploiement du vérin et de sorte que les moyens de rappel tendent à rétracter le piston.
- la première portion comprend au moins un conduit d'alimentation conformé pour alimenter la chambre en fluide à infuser, dans lequel le piston comporte un passage dont une extrémité aval est en communication fluidique avec ledit conduit d'alimentation et dont une extrémité amont est en communication fluidique avec un canal d'alimentation destiné à être connecté à la chaudière.
- le cylindre comporte des moyens d'emmanchement solidaires du cylindre, s'étendant dans la chambre de poussée, conformés pour coulisser à l'intérieur du piston et logeant le canal d'alimentation. Ainsi, le canal d'alimentation est un pratiqué dans les moyens d'emmanchement.
- les moyens d'emmanchement et le passage présentent des formes complémentaires de sorte que les moyens d'emmanchement coulissent à l'intérieur du passage pour assurer en partie au moins le guidage du piston. De préférence, les moyens d'emmanchement sont formés par un arbre et le piston comprend un alésage conformé pour loger l'arbre. Des joints sont prévus sur l'arbre et/ou à l'intérieur du passage pour assurer l'étanchéité de fluidique entre le passage et la chambre de poussée.
- le cylindre comprend un fond faisant face au piston et des parois longitudinales s'étendant depuis le fond pour définir avec le piston la chambre de poussée et dans lequel les parois transversales sont conformées pour guider au moins en partie le piston.
- la deuxième portion de chambre comporte un conduit d'évacuation agencé pour conduire la boisson infusée hors du système vers un espace de récupération de boisson infusée. Typiquement, l'espace de récupération est configuré pour accueillir une tasse.
- le système comprend une face de réception configurée pour recevoir un récipient pour récupérer la boisson infusée, la deuxième portion étant disposée entre la chambre d'infusion et la face de réception. De préférence, la chambre d'infusion comporte deux portions de chambre, la première étant mobile et la deuxième étant fixe. La deuxième portion de chambre est solidaire d'un bâti du système. La deuxième portion de chambre est réalisée dans un matériau thermiquement isolant, de préférence en plastique.
- un clapet taré est configuré de sorte à obturer l'alimentation de la chambre d'infusion lorsque la pression du fluide chauffé est inférieure à un seuil prédéterminé.
- le système est agencé de sorte que le clapet taré s'ouvre uniquement lorsque la pression dans la chambre de poussée (100) assure la fermeture de la chambre d'infusion.

Selon un autre objet de l'invention comme définitive dans les revendications on prévoit une machine de production de boisson comprenant un système selon l'une quelconque des caractéristiques précédentes.

De manière facultative, la machine selon l'invention comme définitive dans les revendications comprend en outre au moins l'une quelconque des caractéristiques suivantes :
- la machine selon la revendication précédente comprend une chaudière et une pompe disposées en amont du système, la machine étant configurée de manière à ce que la pompe alimente la chambre de poussée et la chaudière.
- le système est configuré pour être solidarisé de manière amovible sur un module de la machine comprenant la pompe et la chaudière.
- la machine est configurée de sorte que la solidarisation du système sur ledit module de la machine provoque la mise en communication fluidique du système avec la pompe et avec la chaudière.

De manière plus générale, la solidarisation du système d'infusion sur ledit module de la machine provoque la mise en communication fluidique du système d'infusion avec un circuit hydraulique comprenant au moins une pompe et une chaudière. Cet aspect de l'invention peut être exploité indépendamment de la séparation de l'alimentation de la chambre d'infusion et de l'alimentation de l'actionneur.
- de préférence, le système d'infusion sur ledit module de la machine s'effectue par encliquetage ou par clippage ou par tout autre moyen de fixation amovible et rapide à mettre en place.
- ledit module comporte une branche de circuit hydraulique dont une extrémité amont est connectée à la pompe et dont une extrémité aval est connectée à des premiers moyens de connexion fluidique; le système d'infusion comporte des premiers moyens de connexion fluidique complémentaires, configurés pour coopérer avec les premiers moyens de connexion fluidique pour assurer une connexion fluidique entre l'actionneur et la pompe; et dans lequel les premiers moyens de connexion fluidique et les premiers moyens de connexion fluidique complémentaires sont configurés pour coopérer par encliquetage ou par emmanchage.

Avantageusement, la solidarisation du système sur ledit module entraîne la coopération des premiers moyens de connexion fluidique et des premiers moyens de connexion fluidique complémentaires.
- le module comporte une branche de circuit hydraulique dont une extrémité amont est connectée à la chaudière et dont une extrémité aval est connectée à des deuxièmes moyens de connexion fluidique ; le système d'infusion comporte des deuxièmes moyens de connexion fluidique complémentaires, configurés pour coopérer avec les deuxièmes moyens de connexion fluidique pour assurer une connexion fluidique entre le système d'infusion et la chaudière ; et dans lequel les deuxièmes moyens de connexion fluidique et les deuxièmes moyens de connexion fluidique complémentaires sont configurés pour coopérer par encliquetage ou par emmanchage.

Avantageusement, la solidarisation du système sur ledit module entraîne la coopération des deuxièmes moyens de connexion fluidique et des deuxièmes moyens de connexion fluidique complémentaires.
- Avantageusement, le système est configuré de sorte que la solidarisation des premier moyens de connexion fluidique et des premier moyens de connexion fluidique complémentaires provoque la solidarisation des deuxième moyens de connexion fluidique et des deuxième moyens de connexion fluidique complémentaires et inversement. De préférence, une même étape d'emmanchement ou d'encliquetage et/ou un unique mouvement permet de connecter l'ensemble des moyens de connexion fluidiques. Cela permet de faciliter grandement l'assemblage et le démontage de la machine.
- De préférence, les premier et deuxième moyens de connexion portés par le système d'infusion sont disposés à proximité. De préférence, ils sont disposés côte à côte. Encore plus préférentiellement ils sont juxtaposés. Dans un mode de réalisation encore plus préféré, ils sont concentriques. L'un parmi les premier et deuxième moyens de connexion forme un cylindre intérieur et l'autre parmi les premier et deuxième moyens de connexion forme un cylindre extérieur à l'intérieur duquel est logé le cylindre intérieur. Ainsi l'un du circuit de fluide passe à l'intérieur de l'autre circuit de fluide. Avantageusement, cela permet de concentrer en une zone réduite les efforts générés par la poussée du fluide sous pression. Les moments créés par cette force de poussée appliquée au niveau des premier et deuxième moyens de connexion sont ainsi plus faciles à maîtriser. En outre, l'encombrement du système et de la machine sont réduits.
- au moins l'un parmi les premiers et les deuxièmes moyens de connexion fluidique comportent une tétine munie d'un clapet anti-retour et dans laquelle au moins l'un parmi les premiers et les deuxièmes moyens de connexion fluidique complémentaires comportent un doigt, le doigt et le clapet anti-retour étant configurés de manière à ce que lorsque le système d'infusion est solidarisé sur la machine le clapet anti-retour permet le passage du fluide hors du module et de manière à ce que lorsque le système d'infusion est désolidarisé de la machine le clapet anti-retour empêche l'écoulement du fluide hors du module.

Ces caractéristiques de l'invention peuvent également être exploitées indépendamment de la séparation de l'alimentation de la chambre d'infusion et de l'alimentation de l'actionneur.

D'autres caractéristiques, buts et avantages de la présente invention apparaîtront à la lecture de la description détaillée qui va suivre et au regard des dessins annexés donnés à titre d'exemple non limitatif et sur lesquels :
La figure 1 est une vue de côté et en coupe longitudinale d'un système d'infusion selon un exemple de réalisation de l'invention. Sur cette figure, la chambre d'infusion est totalement ouverte.
La figure 2 est une vue en perspective et en coupe longitudinale du système illustré en figure 1, la chambre d'infusion étant fermée.
Les figures 3 à 10 sont des schémas d'une machine selon un exemple de réalisation de l'invention incorporant notamment le système d'infusion illustré aux figures 1 et 2, ainsi qu'un réservoir, une pompe, une chaudière, une électrovanne de décharge et une vanne ou électrovanne de sortie. Chaque schéma représente une phase de fonctionnement de la machine.

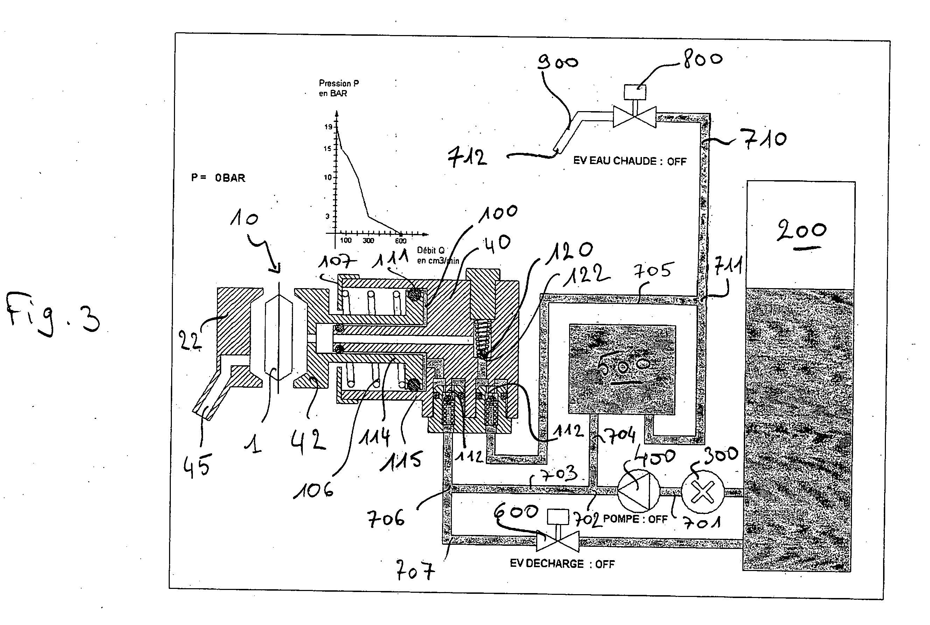

A la figure 3, la pompe ne délivre aucune pression.

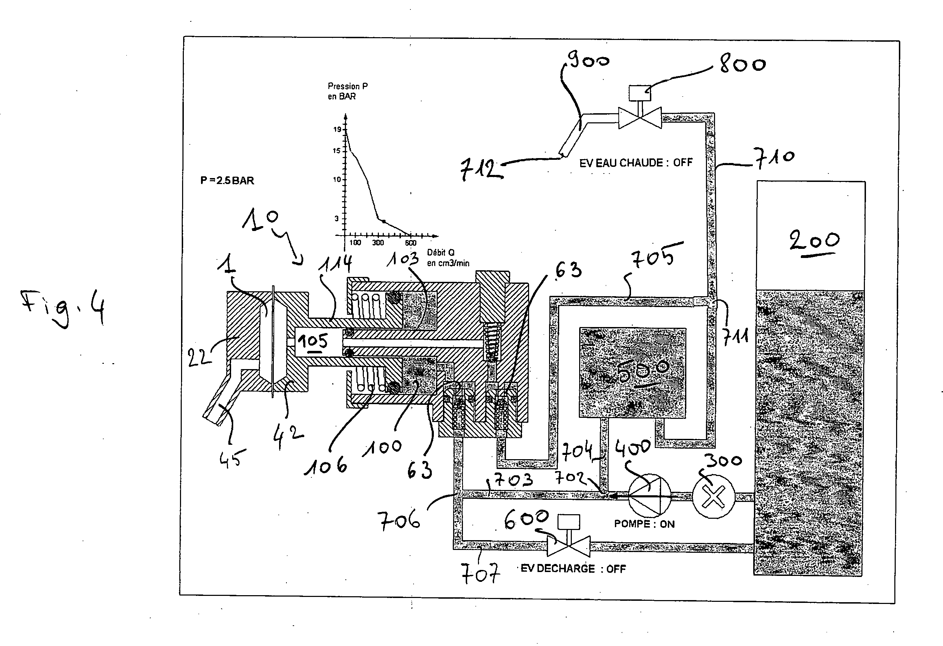

En figure 4, la pompe délivre une pression tendant à refermer la chambre d'infusion.

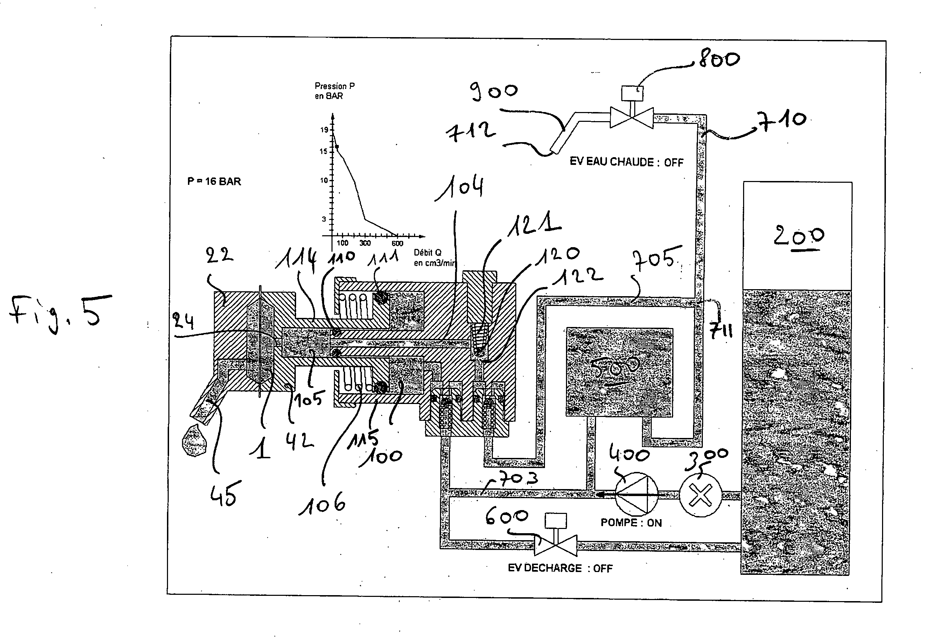

La figure 5 représente la phase d'infusion, la chambre d'infusion est refermée et la chaudière délivre de l'eau chauffée dans la chambre d'infusion.

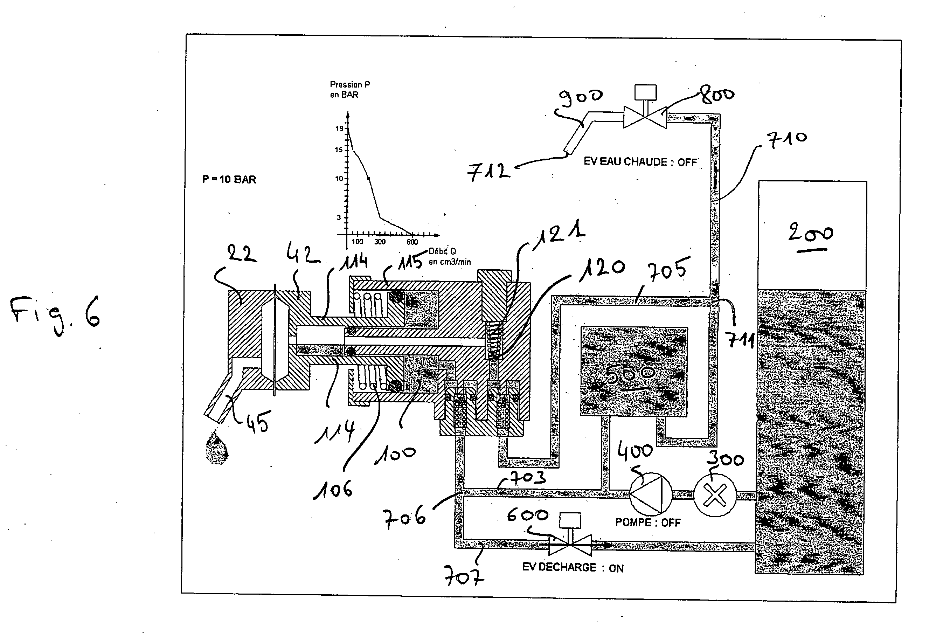

En figure 6, l'infusion est achevée et la pression baisse.

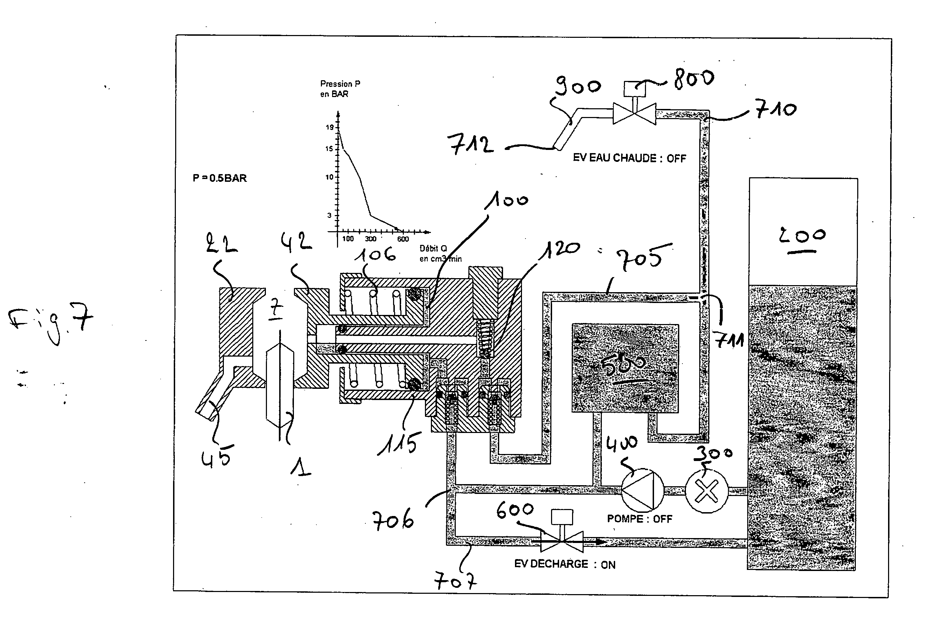

En figure 7, l'actionneur regagne sa position rétractée permettant l'ouverture de la chambre d'infusion.

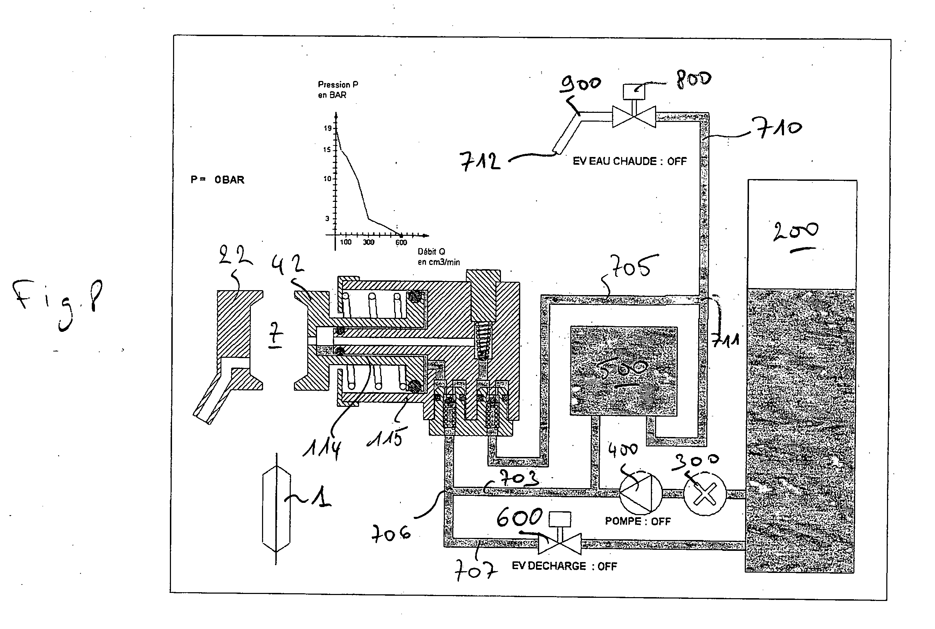

En figure 8, la pression délivrée par la pompe est nulle et la dose est libérée.

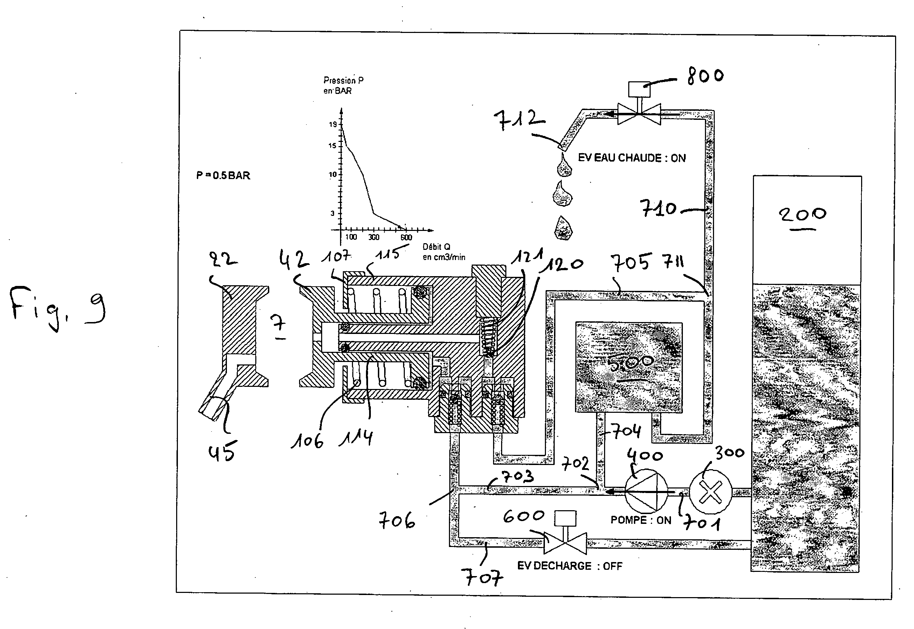

En figure 9, l'électrovanne de sortie est ouverte, l'électrovanne de décharge est fermée, la pompe et la chaudière fonctionnent permettant de délivrer du fluide chauffé à basse pression.

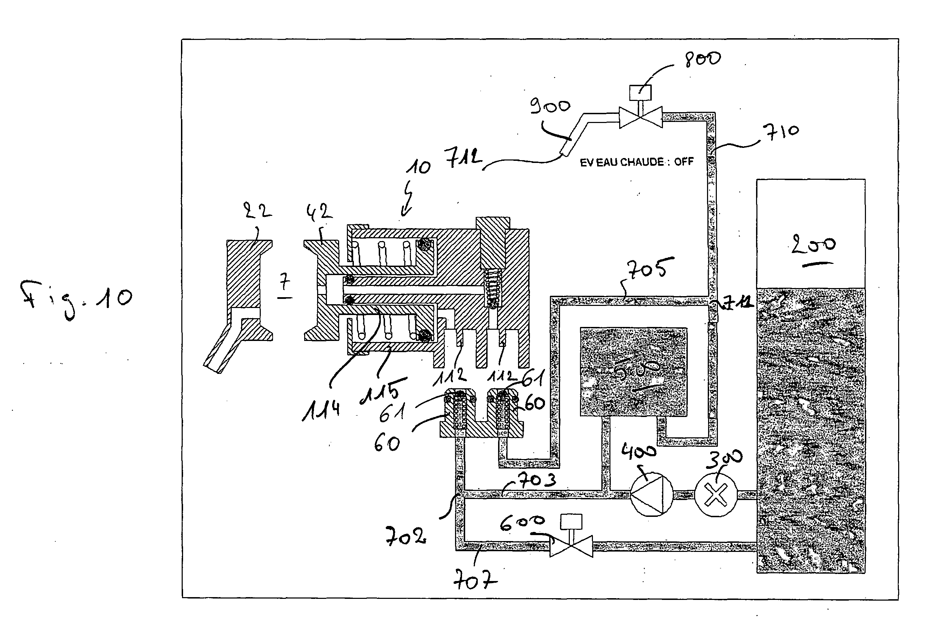

En figure 10, le système d'infusion est désolidarisé du reste de la machine alors que de l'eau est présente dans le circuit hydraulique de cette machine.

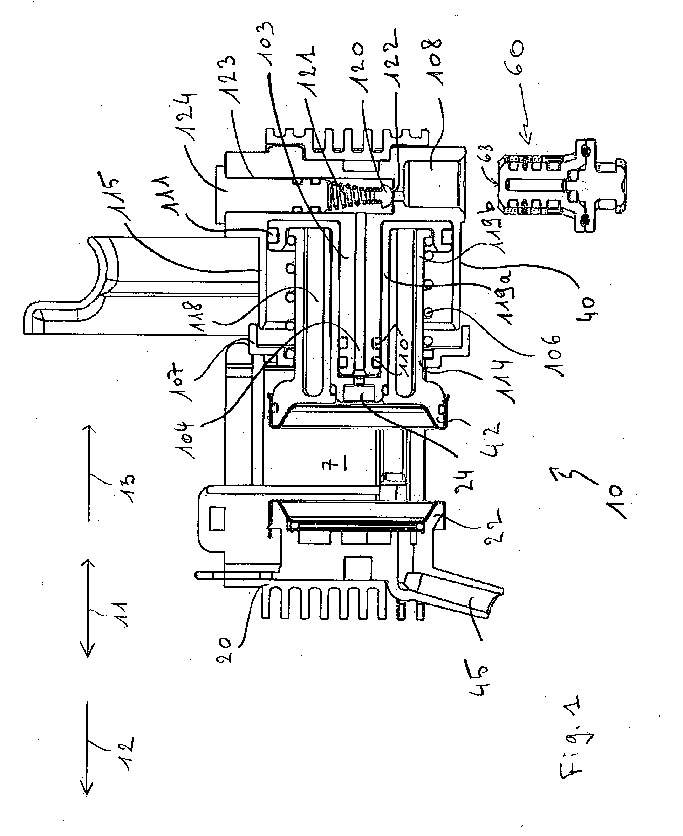

En référence aux figures 1 à 10, on a illustré une machine de préparation de boisson selon l'invention comportant un système 10 d'infusion.

On qualifiera d'amont et d'aval les portions d'espace respectivement disposées avant et après un point considéré relativement à l'écoulement d'un flux dans la machine lors d'un cycle de préparation d'une boisson.

Dans la présente demande, on qualifie de basse pression une pression insuffisante pour préparer une boisson par infusion sous pression. Typiquement une basse pression est inférieure à 3 bars.

Dans le cadre de la présente invention, on peut utiliser des doses du type présentées sur les figures et décrits dans le document WOA9507041 bien que cet exemple ne soit pas limitatif. Sur ces figures, le produit infusé, par exemple la mouture de café, est enfermée dans un volume intérieur de la dose constituée par l'assemblage de couches jointes par leurs périphéries au niveau d'un pourtour. Avantageusement, la présente invention est utilisable avec des types variés de doses ou de conditionnements. Elle n'implique notamment pas que le pourtour de la dose 1 soit rigide. De manière plus générale, l'invention s'applique quel que soit le type de dose. Elle s'applique aux doses présentant une enveloppe extérieure souple ou rigide de type capsule. Elle s'applique également aux doses dont l'enveloppe extérieure est apte à disparaître au moins en partie lors de l'infusion, par dissolution par exemple. Elle s'applique encore aux doses formées d'un produit à infuser agrégé par un liant et/ou par l'application d'une pression. Une telle dose formée d'un agrégat de produit à infuser tel que le café peut être constituée en dehors de la machine ou être constituée par un module dédié de la machine.

Le système 10 d'infusion selon l'invention, également désigné groupe d'infusion comporte une chambre d'infusion 7 destinée à recevoir une dose 1. La chambre d'infusion 7 comprend deux portions de chambres agencées pour être mutuellement éloignées ou rapprochées par un actionneur 40 afin de respectivement fermer ou ouvrir la chambre d'infusion 7.

On désignera par demi chambres des pièces aptes à être disposées en contact mutuel ou au contact d'une dose 1 pour former un volume étanche faisant office de chambre d'infusion 7. L'invention n'implique en aucune manière que les deux portions de chambre présentent mutuellement une quelconque symétrie.

Dans l'exemple de réalisation présenté, l'une des portions de chambre, désignée première portion de chambre 42 ou portion mobile, est entraînée par un actionneur 40 autorisant le rapprochement et l'éloignement mutuels des portions de chambre. De préférence, la première portion de chambre 42 est portée par l'actionneur. L'autre portion de chambre, désignée par la suite deuxième portion de chambre ou portion fixe 22, est solidaire d'un bâti 20 de la machine. Chacune des portions de chambre présente une extrémité définissant un pourtour contenu dans un plan sensiblement perpendiculaire à l'axe longitudinal 11.

On désignera par la suite axe longitudinale 11 ou direction longitudinal 11 la direction comprenant la direction principale de déplacement de l'actionneur 40. On qualifiera de sens avant 12 le sens, selon cet axe 11 contribuant au rapprochement mutuel des deux portions de chambre et on qualifiera de sens arrière 13, le sens selon cet axe 11 permettant un éloignement mutuel des deux portions de chambre 22, 42. La direction longitudinale 11, le sens avant 12 et le sens arrière 13 sont représentés en figure 1.

Dans le cadre de l'exemple de réalisation représenté, la première portion de chambre 42 présente un conduit d'alimentation 24 connecté à des moyens d'alimentation en fluide à infuser, typiquement de l'eau chaude. De manière conventionnelle, les moyens d'alimentation forment un circuit d'eau chaude comportant un réservoir, une chaudière 500 permettant d'augmenter la température d'une partie de l'eau issue du réservoir jusqu'à une température souhaitée en vue de son infusion dans la chambre d'infusion 7, ainsi qu'une pompe 400 permettant d'élever la pression de l'eau dans le circuit. Lors de l'infusion, les deux portions de chambre 42, 22 sont maintenues fermement au contact l'une de l'autre et délimitent un volume étanche de réception de la dose 1. L'étanchéité peut être réalisée par application des pourtours des deux portions de chambre sur le pourtour de la dose 1 qui fait alors office de joint. L'étanchéité peut également être assurée ou être renforcée des moyens d'étanchéité rapportés.

La deuxième portion de chambre 22 comporte un conduit d'évacuation 45 de boisson en communication fluidique d'une part avec l'intérieur de la chambre d'infusion 7 et avec une sortie de boisson d'autre part. Ce conduit d'évacuation 45 est destiné à assurer l'évacuation de la boisson résultant de l'infusion de la dose 1 vers un contenant tel qu'une tasse à café.

Après infusion, lorsque la première portion de chambre 42 est éloignée de la deuxième portion de chambre 22, la chambre d'infusion 7 est ouverte, la dose 1 déjà infusée n'est alors plus enserrée dans la chambre d'infusion 7. Cette dose 1 est évacuée de la chambre d'infusion 7 par gravité et tombe dans un bac de récupération.

La structure du système d'infusion 1 selon l'invention va maintenant être détaillée.

L'actionneur 40 comprend une chambre de poussée 100 destinée à être alimentée par un fluide sous pression issu de la pompe. Il est configuré pour entraîner la première portion 42 de manière à commander au moins en partie la fermeture de la chambre d'infusion 7 lorsque la chambre de poussée 100 est alimentée par une pression supérieure à une pression donnée.

En outre, les moyens d'alimentation 24, 104, 108, portés au moins en partie par la première portion de chambre 42, sont fluidiquement isolés de la chambre de poussée 100.

Ainsi, le fluide d'alimentation de l'actionneur est isolé du fluide chauffé pour l'infusion. Il en résulte que lors de la phase d'ouverture de la chambre d'infusion 7, l'actionneur ne chasse pas d'eau chauffée. La quantité d'eau chauffée est donc réduite et la consommation énergétique de la machine est amoindrie.

En outre, et de manière particulièrement avantageuse, le système est configuré de sorte que les moyens d'alimentation en fluide de la chambre d'infusion 7 et l'actionneur de la chambre d'infusion 7 sont disposés du même côté de la chambre d'infusion 7. De manière encore plus avantageuse, les moyens d'alimentation et l'actionneur sont disposés en arrière de la chambre d'infusion 7.

Ainsi, aucun organe d'alimentation de la chambre ou d'actionnement ne doit nécessairement être disposé en avant de la deuxième portion 22. La face avant de la deuxième portion 22 est solidaire du bâti. La deuxième portion 22 peut ainsi être positionnée au plus près d'une face avant d'une machine équipée du système selon l'invention. On désigne par face avant une face depuis laquelle l'utilisateur est destiné à interagir avec la machine pour préparer une boisson. Typiquement, la face avant comporte un espace de récupération de la boisson infusée. Cet espace de récupération, non représenté, est par exemple un plan de pose d'une tasse.

La distance entre la chambre d'infusion 7 et la face avant de la machine étant réduite, le conduit d'évacuation 45 peut également être limité. En particulier l'invention permet de se passer d'un long conduit d'évacuation ou d'une goulotte de rallonge habituellement nécessaire à l'amenée de la boisson infusée jusque dans une tasse. Un long conduit d'évacuation ou une goulotte de rallonge est habituellement nécessaire pour que l'utilisateur voie sa tasse sans qu'une partie de la machine ne la masque. Ce positionnement de la tasse suffisamment en avant de la machine est en pratique nécessaire afin de bien positionner la tasse, de contrôler le niveau de remplissage et d'apprécier l'écoulement de la boisson.

Or, au cours du développement de la présente invention, il s'est avéré que la distance séparant la chambre d'infusion de la tasse impacte suffisamment la température du fluide infusé pour modifier la qualité de la boisson obtenue. Notamment il s'est avéré qu'une longue distance a tendance à casser la mousse se formant habituellement à la surface d'un café. En outre, cette distance rend délicat le contrôle de la température de la boisson à son arrivée dans la tasse. Or, la perception gustative d'une boisson infusée, telle que le café dépend largement de la température lors de la dégustation.

En raccourcissant la distance entre la chambre d'infusion et la face avant de la machine, l'invention permet de raccourcir la distance séparant la tasse de la chambre d'infusion 7. Les pertes thermiques lors de l'acheminement de la boisson sont donc réduites, améliorant de ce fait la qualité de la boisson obtenue.

De plus, la longueur du conduit entre la chambre et la tasse augmente les transferts thermiques entre la boisson et la machine. Plus le conduit est froid plus ces transferts thermiques sont élevés. Or, lorsque plusieurs cafés sont effectués dans un intervalle de temps court le conduit chauffe, réduisant de ce fait les transferts thermiques. Les transferts thermiques varient donc fortement en fonction de l'utilisation de la machine ce qui empêche une bonne répétitivité de la qualité de la boisson obtenue. En réduisant la longueur du conduit d'évacuation, l'invention permet donc de réduire les transferts thermiques et contribue par conséquent à améliorer la répétitivité de la qualité de la boisson obtenue sans amoindrir la fiabilité du fonctionnement.

De plus, l'invention limite la quantité d'eau chauffée rejetée quelle que soit la longueur de course de l'actionneur. L'invention autorise ainsi une course suffisamment longue pour assurer tout le déplacement de la portion de chambre 42 mobile. L'invention permet alors de se passer d'un dispositif complémentaire ayant pour fonction d'effectuer une partie du déplacement de la chambre mobile. L'encombrement de la machine est par conséquent réduit.

De préférence, l'actionneur entraînant la première portion de chambre est un vérin 40. Le vérin comprend un piston 114. La première portion 42 de chambre est portée par le piston 114 du vérin 40. Le cylindre 115 du vérin comporte un fond 102 faisant face à la surface de poussée 101 du piston 114. Le fond 102 du vérin 40, ses parois longitudinales et la surface de poussée 101 définissent une chambre de poussée 100. Cette chambre de poussée 100 comporte au moins un orifice 113 reliant la chambre de poussée à une entrée de fluide de poussée 109 portée par le système 10 et destinée à être connectée à la pompe. L'activation de la pompe provoque la mise sous pression de la chambre de pression 100 ce qui entraîne le déplacement du piston 114 vers l'avant 12 et son éloignement par rapport au fond 102 du cylindre 115.

Le système comprend des moyens de rappel du vérin 40. Ces moyens comprennent un ressort de rappel 106 configuré pour assurer le retour vers l'arrière 13 du piston 114 en position rétractée lorsque la pression baisse dans la chambre de poussée 100. Le ressort 106 travaille en compression et s'étend longitudinalement. De préférence, il est cylindrique est entoure le piston 114. Il prend appui en amont sur le piston et en aval sur une butée 107 solidaire du bâti. Dans un mode de réalisation non représenté cette butée 107 contribue au moins en partie au guidage du piston.

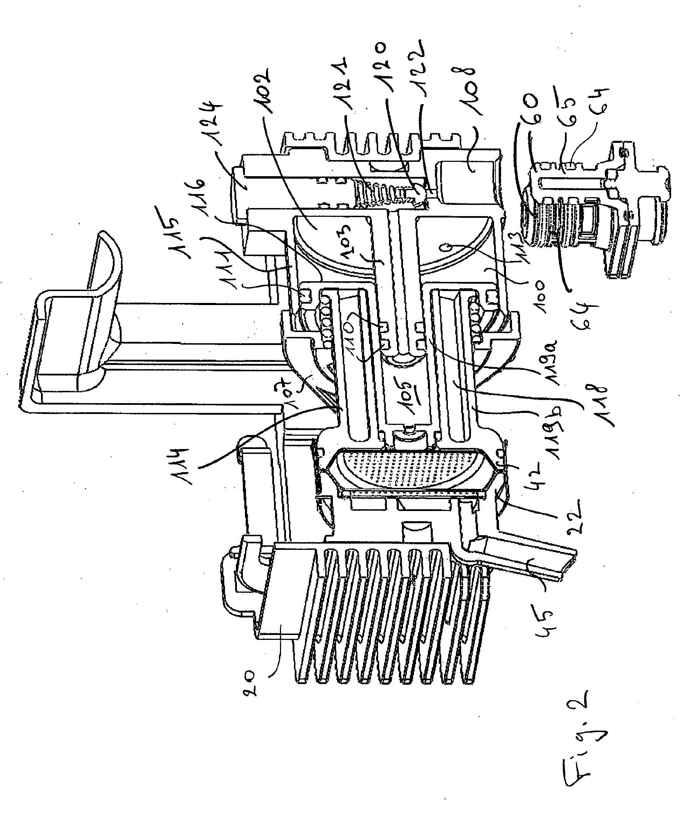

La figure 1 représente le vérin dans sa position rétractée, le ressort de rappel 106 étant déployée et le piston étant en contact avec le fond du cylindre 115. La chambre est alors complètement ouverte. La figures 2 représente le vérin dans sa position déployée, le ressort de rappel 106 étant rétracté au maximum et le piston étant repoussé vers l'avant 12 et éloigné du fond du cylindre 115. La chambre est alors complètement fermée.

Le cylindre 115 comporte des moyens d'emmanchement 103 formant saillie depuis le fond 102 et s'étendant en direction du piston. Le piston comporte un logement s'étendant depuis la surface de poussée 101. Le logement et les moyens d'emmanchement 103 sont conformés de sorte que les moyens d'emmanchement 103 pénètrent en profondeur dans le logement lors du retour du vérin 40 en position rétractée.

Le piston 114 s'étend ainsi sensiblement longitudinalement. Son extrémité amont est définie par une paroi 116 faisant face au fond du cylindre 115. Cette paroi amont définit en partie la chambre de poussée 100. Elle est ainsi destinée à être poussée vers l'avant par le fluide sous pression. L'extrémité aval du piston 114 est formée par la première portion de chambre 42. Le piston 114 comprend également un corps 117 de piston 114 portant le logement et destiné à loger les moyens d'emmanchement. Ce corps 117 est sensiblement cylindrique et s'étend depuis la paroi 116 amont jusqu'à la première portion de chambre 42. De préférence, le corps 117 du piston 114 comporte une cavité 118 fermée pour en alléger le poids et réduire la quantité de matière.

Le piston 114 illustré sur les figures est formé de deux parties mutuellement assemblées. Une première partie forme la paroi 116 et porte une portion mâle 119a du corps 117. Cette portion mâle 119a forme le logement. Une deuxième partie porte la première portion de chambre 42 et une portion femelle 119b du corps 117. La portion femelle 119b du corps 117 s'emmanche sur la portion mâle 119a du corps 117 pour former le corps 117 du piston 114. La portion femelle 119b du corps 117 comporte une cavité ouverte à son extrémité amont. Cette extrémité amont est configurée pour entrer au contact de portion mâle 119a du corps 117 de sorte à fermer la cavité 118.

Quelle que soit la position du piston 114, l'extrémité aval des moyens d'emmanchement 103 est insérée dans le logement du piston 114. Des joints 110 disposés entre les moyens d'emmanchement 103 et piston 114 assurent en permanence l'étanchéité du passage 105. De préférence, ces joints 110 sont montés sur les moyens d'emmanchement, à proximité de l'extrémité aval de ces derniers.

Les moyens d'emmanchement 103 comportent un canal d'alimentation 104 intérieur. Une extrémité amont du canal 104 est fluidiquement reliée à une entrée de fluide 108 connectée à la chaudière. Une extrémité aval débouche dans un passage 105 formé par le logement de la partie mobile de l'actionneur. Ce passage 105 débouche en aval dans le conduit d'alimentation 24 porté par la première portion de chambre 42 et alimentant la chambre d'infusion 7.

Ainsi, lors du déploiement du vérin 40, le piston 114 s'éloigne du fond 102 du cylindre 115 et le passage 105 s'agrandit. Le passage 105 dans sa dimension maximale est représenté en figure 2. Inversement, lors de la rétractation du vérin 40, le passage 105 se raccourcit. Le passage 105 dans sa dimension minimale est représenté en figure 1. Quelle que soit la position du piston 114, la chambre d'infusion 7 est toujours en communication fluidique avec le canal d'alimentation 104.

Avantageusement ces moyens d'emmanchement 103 participent au guidage du piston 114.

De manière préférée, le guidage du piston 114 est également assuré par une coopération entre les parois longitudinales du cylindre 115 et le piston 114.

Au moins un joint 111 est disposé entre la paroi longitudinale du cylindre 115 et le pourtour périphérique de la paroi 116 du piston 114 disposée au regard du fond du cylindre 115. Ce joint 111 assurer l'étanchéité de la chambre de poussée 100 et contribue au moins en partie au guidage du piston 114.

De préférence, les moyens d'emmanchement 103 définissent un arbre et le logement du piston 114 est un alésage. De préférence, l'arbre passe par le centre du cylindre 115 et l'alésage est situé au centre du piston 114.

Ainsi, le système est agencé de sorte que le fluide issu de l'entrée de fluide à infuser 108 est séparé du fluide issu de l'entrée de fluide de poussée 109. Ces deux fluides peuvent donc être alimentés séparément, par exemple par deux branches 703, 705 différentes du circuit hydraulique, permettant de ce fait de ne pas approvisionner en eau chaude la chambre de poussée 100. Le rendement énergétique de la machine est ainsi amélioré.

De manière avantageuse, le système comporte un clapet taré 120 disposé entre l'entrée 108 de fluide à infuser et le canal d'alimentation 104 pratiqué dans l'arbre du cylindre 115.

Le clapet taré 120 est configuré de sorte à empêcher le passage du fluide depuis l'amont vers l'aval lorsque la pression du fluide d'infusion est inférieure à un seuil prédéterminé désigné seuil de pression d'infusion. Ce seuil correspond typiquement à la pression recherchée pour une infusion optimale du produit à infuser. Le fonctionnement de la machine est ainsi contrôlé précisément ce qui permet d'améliorer le processus d'infusion.

En outre, ce clapet est agencé de sorte à empêcher le retour du fluide depuis le canal d'alimentation 104 et la chambre d'infusion 7 vers l'entrée 108 de fluide à infuser. Il permet ainsi d'éviter le retour d'eau chaude vers le réservoir ce qui permet de mieux contrôler la température d'infusion et d'éviter d'importantes proliférations microbiennes dans le réservoir. En outre le clapet taré évite la vidange involontaire du circuit par sa mise à l'atmosphère.

Selon le mode de réalisation illustré, le clapet taré, lorsqu'il empêche le passage du fluide, est en appui sur un orifice d'entrée 122 formant siège de butée. Le fluide à infuser passe nécessairement par cet orifice d'entrée 122 vers la chambre d'infusion 7. Le clapet taré 120 coopère avec un ressort taré et disposé de sorte à repousser le clapet taré 120 contre le siège de l'orifice d'entrée 122. Ainsi, le clapet taré 120 est soumis à deux forces opposées lorsqu'un fluide sous pression parvient à l'entrée 108 de fluide à infuser. Une première force correspond à la poussée exercée par ce fluide. Une deuxième force correspond à la poussée du ressort taré 121. Cette deuxième force est constante. Tant que la pression du fluide n'a pas atteint le seuil de pression d'infusion, la force du ressort taré 121 est supérieure à la force de poussée du fluide et ce dernier est bloqué par le clapet 120. Lorsque la pression atteint le seuil de pression d'infusion, la force de poussée du fluide surpasse celle du ressort taré 121 entraînant l'éloignement du clapet taré 120 par rapport à l'orifice d'entrée formant siège 122. Le fluide peut alors s'écouler vers l'aval jusqu'à la chambre d'infusion 7.

De préférence, le système 10 comprend un alésage 123 à l'intérieur duquel un bouchon 124 portant le ressort taré 121 et le clapet taré 120 est introduit. De préférence, l'alésage 123 est vertical et le clapet taré 120 se déplace verticalement. Le bouchon 124 est muni d'un joint assurant l'étanchéité de l'alésage 123.

De manière particulièrement avantageuse et comme cela sera décrit par la suite en référence aux figures 3 à 9, le système d'infusion 10 est agencé de sorte que le clapet taré 120 s'ouvre lorsque la chambre d'infusion 7 est parfaitement fermée. On prévoit à cet effet que le ressort taré 121 permet le passage du fluide à infuser uniquement lorsque la pression dans la chambre de poussée 100 a permis la fermeture de la première portion 42 sur la deuxième portion 22 ainsi que l'application d'un effort sur la partie mobile de l'actionneur suffisamment important pour assurer l'étanchéité de la chambre d'infusion 7 lors de l'infusion.

De manière avantageuse, le groupe d'infusion 10 selon l'invention, également désigné groupe, est également configuré pour être monté de manière amovible sur le reste de la machine. Le reste de la machine, désigné module, comprend tout au moins la pompe et la chaudière.

La machine est agencée de sorte que la solidarisation mécanique du système d'infusion sur le module de la machine provoque la connexion fluidique du système d'infusion 10 avec ce module. Inversement, la désolidarisation mécanique du système d'infusion 10 sur le module supprime la connexion fluidique du système d'infusion 10 avec le module.

Plus précisément, la machine est agencée de sorte qu'un mouvement de translation, de préférence vertical, permette la solidarisation du système sur le module. Le mouvement de translation vertical entraîne la coopération de l'entrée 108 de fluide à infuser et de l'entrée de fluide de poussée 109 avec une branche respective 705, 703 du circuit hydraulique porté par le module de la machine.

Le module comprend un réceptacle, non représenté, apte à loger au moins en partie le système d'infusion 10. Le réceptacle et le système d'infusion 10 comprennent des organes complémentaires conformés pour permettre leur solidarisation amovible. Le réceptacle comprend en outre une tétine 60, 60 pour chacune des entrées 108 et 109. De préférence, chaque tétine 60 présente un corps 65 conformé pour se loger en partie au moins dans l'entrée 108 ou l'entrée 109 correspondante. Chaque tétine est munie de joints, de préférence toriques pour assurer une liaison étanche entre le système d'infusion 10 et le circuit hydraulique du module.

Avantageusement, les tétines des entrées 108 et 109 sont liées entre elles et forment par exemple un ensemble monobloc venu de matière.

Le système d'infusion 10 et les tétines 60 sont conformés de sorte que la solidarisation du système d'infusion 10 sur le réceptacle entraîne l'insertion de chaque tétine dans l'entrée 108, 109 qui lui est associée.

Le corps 65 de la tétine 60 comprend un alésage de passage du fluide dont l'extrémité amont est en communication fluidique avec une branche du circuit hydraulique du module et dont l'extrémité aval forme un orifice 63 débouchant dans l'entrée 108 ou 109.

De manière avantageuse, l'alésage de la tétine comprend un clapet anti-retour 61 associé à un ressort 62 configuré pour que le ressort 62 plaque le clapet anti-retour 61 sur l'orifice 63 de sorte à obstruer l'alésage. Le clapet anti-retour 61 empêche donc le passage du fluide. L'entrée 108 ou 109 de fluide est munie d'un doigt 112 conformé pour coopérer avec le clapet anti-retour 61 lorsque la tétine 60 est logée dans l'entrée 108, 109 de sorte à éloigner le clapet anti-retour 61 par rapport à l'orifice 63 de l'alésage de la tétine 60. Lors de l'insertion du système d'infusion 10 sur le module, le doigt 112 pénètre dans l'orifice 63 de l'alésage, puis entre au contact du clapet anti-retour 61, puis repousse ce dernier pour libérer l'orifice 63. Le fluide peut ainsi s'écouler à travers l'orifice 63 et la communication fluidique est établie entre le module de la machine et le système d'infusion 10.

La machine selon l'invention est conformée de sorte que lors de la désolidarisation du système d'infusion 10 par rapport au module, le doigt 112 s'écarte du clapet anti-retour 61 permettant au ressort 62 de plaquer à nouveau le clapet anti-retour 61 contre l'orifice 63. Ce dernier est alors de nouveau obstrué et empêche l'écoulement du fluide hors du module de la machine.

L'invention permet ainsi d'extraire le système d'infusion 10 par rapport au module de la machine sans provoquer l'écoulement de l'eau présente dans le circuit hydraulique de cette dernière. Cette caractéristique de l'invention est particulièrement avantageuse en cas de transport du module ou en cas de démarrage, même improbable, de la pompe alors que le système d'infusion 10 est extrait.

En outre, le clapet anti-retour 61 empêche la mise à l'air libre du circuit hydraulique de la machine, ce qui évite sa contamination lorsque le système d'infusion 10 est démonté.

L'invention permet ainsi de faciliter l'extraction du système d'infusion 10 en vue de son nettoyage ou de sa réparation par exemple.

L'invention va maintenant être décrite au regard des figures 3 à 10 illustrant les phases principales du fonctionnement de la machine.

Ces figures représentent chacune également une courbe illustrant la pression régnant dans l'ensemble du circuit en aval de la pompe 400 et de l'électrovanne de décharge 600 en fonction du débit. Sur l'exemple illustré, la courbe est caractéristique d'une pompe vibrante.

La courbe pression - débit d'une pompe vibrante est sensiblement linéaire et relie un débit maximal lorsque la pression est nulle à une pression maximale lorsque le débit est nul. Sur tous les schémas illustrés, les pressions ne sont que des exemples indiqués par souci de clarté mais ne limitent aucunement la portée de l'invention. En particulier, des pressions significativement plus faibles peuvent être appliquées en restant dans le cadre de l'invention.

Comme illustré en figure 3, la machine comprend un réservoir 200, un conduit de sortie 701 du réservoir 200. Ce conduit de sortie 701 est équipé d'un débitmètre 300 et de la pompe 400. La pompe 400 est par exemple une pompe vibrante. En aval de la pompe 400, un embranchement 702 donne naissance à deux branches 703, 704.

La branche 703 relie la pompe 400 à des moyens de connexion entre le module et le système d'infusion 10. Ces moyens de connexion sont, dans le cadre du mode de réalisation précédemment décrit, une tétine 60 destinée à coopérer avec l'entrée du fluide de poussée 109. L'embranchement 702 relie quant à lui la pompe 400 à la chaudière 500. Cette dernière est ainsi alimentée en fluide sous pression.

Un embranchement 706 est prévu sur la branche 703 reliant la pompe 400 à l'entrée du fluide de poussée 109. Une branche 707 relie cet embranchement 706 au réservoir 200. Une électrovanne de décharge 600 est disposée sur la branche 707.

La sortie de la chaudière 500 est connectée à une branche 705. Cette branche 705 relie la chaudière 500 à des moyens de connexion entre le module et le système d'infusion 10. Ces moyens de connexion sont, dans le cadre du mode de réalisation décrit précédemment, une tétine 60 destinée à coopérer avec l'entrée du fluide chauffé 108.

La machine comprend une dérivation en sortie de chaudière 500. Cette dérivation, désignée branche de sortie 710 présente une entrée 711 et une sortie 712. L'entrée de la branche de sortie peut être connectée aux moyens d'alimentation du système d'infusion en amont du clapet taré 120. Comme illustré sur le mode de réalisation non limitatif des figures 3 à 10, l'entrée 711 de la branche de sortie 710 est connectée à la branche 705 de sortie de chaudière. Selon un mode de réalisation non illustré, la branche de sortie peut être connectée à proximité immédiate de la sortie de la chaudière, voire sur la chaudière 500 elle-même.

La sortie de la branche de sortie est reliée à l'air libre. Cette sortie est aménagée de sorte à être accessible par un utilisateur depuis l'extérieur de la machine, par exemple depuis une face avant de la machine.

La branche de sortie est équipée d'une vanne de sortie 800 commandée électriquement. Cette vanne dans l'exemple particulier décrit est une électrovanne et est désignée électrovanne de sortie 800. On rappelle qu'une électrovanne désigne toute vanne commandée électriquement. Lorsque l'électrovanne de sortie n'est pas activée, elle bloque le passage du fluide et empêche l'écoulement du fluide par la sortie 712. La sortie de la chaudière 500 n'est alors pas mise à pression atmosphérique. La pression dans le circuit hydraulique peut alors s'élever grâce à la pompe 400. En particulier, la pression du fluide peut s'élever au-delà du seuil de pression de fermeture de sorte à pousser le piston 114 contre la portion de chambre fixe et à fermer la chambre d'infusion 7. La pression du fluide peut également s'élever au-delà du seuil de pression d'infusion de sorte à ouvrir le clapet taré 120. Le fluide chauffé peut alors pénétrer dans la chambre d'infusion 7.

L'activation de l'électrovanne de sortie 800 autorise le passage du fluide à travers la branche de sortie 710. Le fluide peut alors s'écouler hors de la machine. Une extrémité du circuit est mise à pression atmosphérique. La machine est configurée de sorte que lorsque l'électrovanne de sortie 800 autorise l'écoulement du fluide, la pression dans le circuit hydraulique ne peut s'élever significativement. En particulier, la pression et le débit délivrés par la pompe ainsi que la section de la branche de sortie ne permettent pas une élévation significative de la pression dans le circuit si l'électrovanne de sortie est ouverte. En particulier, le clapet taré est configuré de sorte que la pression minimale ou seuil de pression d'infusion qui permet son ouverture ne peut être atteinte lorsque l'électrovanne de sortie est ouverte.

Par ailleurs, le vérin est configuré de sorte que la pression minimale ou seuil de pression de fermeture qui permet de repousser le piston 114 pour fermer la chambre d'infusion 7 ne peut être atteinte lorsque l'électrovanne de sortie 800 est ouverte.

Ainsi lorsque l'électrovanne de sortie 8000 est ouverte et que la pompe 400 alimente la chaudière 500, du fluide chaud à basse pression et non infusé est délivré. L'utilisateur peut alors par exemple rallonger sa boisson infusée sous pression, remplir une tasse d'eau chaude, faire chauffer une tasse en vue de la remplir de boisson infusée ou encore préparer une boisson à partir d'eau chaude à basse pression telle que du chocolat. En commandant la pompe de sorte à la faire fonctionner par intermittence, il est possible de délivrer en sortie 712 de branche de sortie 710 un jet de vapeur. On peut alors obtenir de la mousse, de lait par exemple pour réaliser des boissons telles que le macchiato ou le cappuccino. Avantageusement, pour améliorer la production de mousse, on combine la sortie 712 avec un dispositif de type venturi.

De préférence, la sortie 712 de la branche de sortie 710 est munie d'une buse 900. La buse 900 permet par exemple de mieux contrôler le jet d'eau chaude ou de vapeur en sortie de branche de sortie.

La disposition de l'électrovanne de sortie 800 permet également d'extraire le groupe d'infusion pour en assurer le nettoyage ou la maintenance.

La sortie de la chaudière présente ainsi une dérivation, une première branche 705 de la dérivation reliant la chaudière 500 à la chambre d'infusion 7 et une deuxième branche 710 de la dérivation reliant la chaudière 500 à une sortie de fluide.

De préférence, la machine est agencée de sorte que la vanne de décharge 600 et l'électrovanne de sortie 800 ne peuvent pas être ouvertes simultanément.

Avantageusement, la machine est configurée de sorte que l'activation de l'électrovanne de sortie 800 active automatiquement la pompe 400 et la chaudière 500.

Avantageusement, l'utilisation d'une électrovanne 800 dont le corps est en plastique technique agréé au contact alimentaire permet, par sa très faible conductibilité thermique, d'éviter une déperdition d'énergie et conduit à une très bonne efficacité énergétique de la machine lors de la délivrance d'eau chaude à pression atmosphérique.

Selon une première variante de réalisation de l'invention, la branche de sortie 710 et l'électrovanne 800 équipent une machine dans laquelle les alimentations de l'actionneur hydraulique et de la chambre d'infusion sont communes. Ainsi, dans ces machines et contrairement au mode de réalisation décrit sur les figures, l'actionneur est alimenté en fluide chauffé. De préférence, la portion de chambre mobile est mobile en translation. L'autre portion de chambre est fixe. Elle est solidaire d'un bâti de la machine.

Selon une deuxième variante de réalisation de l'invention, une première portion de chambre est entraînée par l'actionneur et la deuxième portion de chambre est connectée à la chaudière pour alimenter la chambre d'infusion. Ainsi, dans ces machines et contrairement au mode de réalisation décrit sur les figures, la portion de chambre mobile n'est pas connectée à la chaudière et n'assure pas l'alimentation de la chambre d'infusion. La portion de chambre fixe est quant à elle connectée à la chaudière et assure l'alimentation de la chambre d'infusion.

Sur toutes les figures 3 à 9 l'électrovanne de sortie 800 est fermée. Comme indiqué sur ces figures son état est OFF, indiquant qu'elle n'est pas activée et bloque le passage de l'eau. L'eau ne peut donc pas s'écouler par la branche de sortie 710.

En figure 3, le débit est maximal et la pression est nulle. Toutes les branches 701, 703, 704, 705, 707 sont remplies d'eau. Les branches 703, 704, 707 sont remplies d'eau froide. La branche 705 est remplie d'eau chaude.

Le système d'infusion 10 est solidarisé sur le module. Les doigts 112 des entrées 108 et 109 permettent l'ouverture des clapes anti-retour 61. Les entrées 108 et 109 sont ainsi remplies d'eau chaude et froide respectivement.

L'eau froide issue de la branche 703 parvient dans la chambre de poussée 100 au travers de l'orifice 113 sans pour autant parvenir à déplacer le piston 114 puisque la pression est nulle. Le ressort de rappel 106 du piston 114 maintient donc ce dernier en position rétractée et la chambre d'infusion 7 demeure ouverte.

L'eau chaude issue de la chaudière 500 par la branche 705 est bloquée au niveau de l'orifice 122. En effet, la pression de l'eau chauffée à l'entrée 108 n'est pas suffisante pour contrer l'effort du ressort taré 121 et repousser le clapet taré 120 au-delà de l'orifice 122.

L'eau chaude ne parvient donc pas dans le canal 104. A fortiori, elle ne parvient pas dans le passage 105, ni dans le conduit d'arrivée 24 porté par la première portion de chambre 42, ni dans la chambre d'infusion 7.

En figure 4, la pompe 400 est activée (état ON). L'électrovanne de décharge est fermée (état OFF) et l'électrovanne de sortie 800 est également fermée (état OFF). La pression dans le circuit hydraulique peut alors augmenter.

Sur cette figure elle ne dépasse pour autant pas le seuil de pression d'infusion définissant le tarage du ressort taré 121. Sur l'exemple illustré, la pression est de 2,5 bars. Le clapet 120 demeure plaqué contre le siège de l'orifice 122 et l'eau chaude ne parvient pas en aval du clapet taré 120. L'eau froide quant à elle présente une pression suffisante pour dépasser un seuil prédéterminé de pression de fermeture et pour contrer la force du ressort de retour 106 du piston 114. Le piston 114 est alors poussé dans le sens avant 12 par le fluide sous pression. La première portion 42 se rapproche alors de la deuxième portion de chambre 22 jusqu'à entrer au contact avec cette dernière pour refermer la chambre d'infusion 7 et emprisonner la dose 1 préalablement introduite.

Une augmentation de pression, tout en demeurant en deçà du seuil de pression d'infusion conduit à augmenter la force de pression de la première portion de chambre 42 sur la deuxième portion de chambre 22 assurant de ce fait l'étanchéité de la chambre d'infusion 7. Dans l'exemple non limitatif illustré, le seuil de pression d'infusion est de 16 bars.

La figure 5 représente la machine une fois cette pression atteinte dans le circuit hydraulique en aval de la pompe 400. Lorsque cette pression est atteinte en aval de la pompe, la force de poussée s'exerçant sur le clapet 120 est suffisante pour contrer l'effort du ressort taré 121. Le clapet taré 120 s'efface alors de l'orifice d'entrée 122. Le fluide chauffé par la chaudière pénètre alors dans le canal d'alimentation 104 puis dans le passage 105, puis dans la chambre d'infusion 7. La dose est alors infusée et la boisson résultant de l'infusion emprunte le conduit d'évacuation 45 en vue de sa récupération dans une tasse. Sur cette figure, l'électrovanne de sortie 800 est encore fermée (état OFF).

Lorsqu'une quantité suffisante d'eau chaude a été délivrée dans la chambre d'infusion 7, la pompe est arrêtée (état OFF). L'électrovanne de décharge 600 est ouverte (état ON) permettant la dépressurisation des branches 707, 704 et 703. Cette phase est illustrée en figure 6. La pression repasse en dessous du seuil prédéterminé d'infusion bloquant au niveau du clapet taré 120 le fluide chauffé. La chambre d'infusion 7 n'est alors plus alimentée en fluide chauffé.

La pression délivrée par la pompe 400 diminuant, la pression régnant dans la chambre de poussée 100 diminue également. Lorsque la pression de cette chambre de poussée 100 n'est plus suffisante pour contrer l'effort du ressort de rappel 106, ce dernier repousse le piston 114 vers l'arrière. La chambre d'infusion 7 est alors ouverte. Cette phase est illustrée en figure 7. Lors de la rétractation du piston 114, le fluide de la chambre de poussée 100 est chassé par le piston à l'extérieur de cette dernière. Le fluide chassé à travers l'orifice 113 et l'entrée 109 regagne le circuit hydraulique du module recevant le système d'infusion 10. Ce fluide chassé emprunte la branche 707, l'électrovanne de décharge 600 étant toujours ouverte et parvient dans le réservoir 200. L'ensemble de l'eau servant à l'actionnement de l'actionneur est donc récupéré au niveau du réservoir 200. La pression dans le circuit hydraulique continu à baisser.

En figure 8, la chambre d'infusion 7 est complètement ouverte et la dose usagée est libérée. La pression dans le circuit hydraulique atteint quasiment la pression atmosphérique. L'électrovanne de décharge est fermée (état OFF).

Comme expliqué précédemment, l'invention permet de séparer les alimentations de la chambre d'infusion 7 et de la chambre de poussée 100 de l'actionneur, la quantité de fluide chauffé est donc significativement réduite augmentant de ce fait le rendement énergétique de la machine. En outre, l'eau de poussée du vérin est récupérée dans le réservoir 200.

Or, dans les systèmes existants, l'eau chauffée est chassée par l'actionneur en fin d'infusion et est rejetée hors du système dans un récipient dédié désigné bassinelle. Ce rejet hors de la machine conduit à un gaspillage d'eau. D'autres systèmes existants prévoient de récupérer cette eau chauffée en l'injectant dans un réservoir alimentant la chaudière. Il s'est avéré que cette solution provoque un échauffement du réservoir conduisant à une prolifération de bactéries dans ce dernier. L'invention offre ainsi un avantage supplémentaire par rapport aux systèmes existants.

La figure 9 illustre une phase de fonctionnement de la machine au cours de laquelle du fluide chauffé à pression atmosphérique est délivré.

L'électrovanne de décharge 600 est fermée (état OFF). La pompe est activée (état ON), permettant d'alimenter la chaudière 500. L'électrovanne de sortie 800 est ouverte (état ON). Le fluide chauffé en sortie de chaudière 500 peut alors s'écouler par la branche de sortie 710. La mise à pression atmosphérique de l'eau de la sortie 712 de la branche de sortie 710 empêche une montée en pression suffisante pour repousser le clapet taré 120. Typiquement la pression dans le circuit hydraulique demeure inférieure à 3 bars. Elle est plus particulièrement de l'ordre de 0,5 bar comme illustré sur la courbe pression/débit de la figure 9. Une augmentation de la puissance de la pompe 400 se traduirait principalement par une augmentation du débit délivré à la sortie 712 sans augmentation significative de la pression à cette sortie 712. Le clapet taré 120 bloque donc l'eau chauffée. L'eau ne s'introduit donc pas dans la chambre d'infusion 7. La mise à pression atmosphérique de l'eau du circuit empêche également une montée en pression suffisante pour repousser le piston 114. La première portion chambre 42 n'est alors pas déplacée.

La figure 10 illustre l'extraction du système d'infusion 10 en vue de son nettoyage et de sa maintenance. La désolidarisation du système d'infusion 10 par rapport au module entraîne la déconnexion des moyens de connexion portés par le module avec les moyens de connexion complémentaires portés par le système d'infusion 10.

En outre, les doigts 112 sont dégagés des clapets anti-retour 61. Ces derniers obturent alors le passage des tétines 60. Le circuit hydraulique du module est alors bloqué.

L'invention n'est pas limitée aux modes de réalisation décrits mais s'étend à tout mode de réalisation dans le cadre des revendications.

Notamment, les caractéristiques relatives à la branche de sortie permettant de délivrer de l'eau chaude ou de la vapeur chaude à basse pression peuvent être implémentées sur une machine dans laquelle l'actionneur est alimenté en fluide chauffé.

En outre, bien que le mode de réalisation préféré prévoit une chambre mobile portée par la partie mobile de l'actionneur, dans des variantes de réalisation on peut prévoir que cette chambre mobile n'est pas portée par ou n'est pas solidaire de la partie mobile de l'actionneur. Dans ce cas, le système est configuré de sorte que les efforts de la partie mobile de l'actionneur sont transmis à la portion de chambre mobile. Typiquement, la partie mobile de l'actionneur entre au contact de la portion de chambré mobile est entraîne cette dernière pour provoquer la fermeture de la chambre d'infusion.

L'invention n'exclut pas non plus de prévoir un dispositif complémentaire, manoeuvrable mécaniquement par exemple, assurant une partie de la course de la portion de chambre mobile.

**REFERENCES**

| | | | |
|---|---|---|---|
| 1. | Dose | 100. | chambre de poussée |
| 10. | Système | 101. | surface de poussée |
| 11. | Axe longitudinal | 102. | fond du vérin |
| 12. | Sens avant | 103. | moyens d'emmanchement |
| 13. | Sens arrière | 104. | canal d'alimentation |
| 20. | Bâti | 105. | passage |
| 22. | Demi chambre fixe | 106. | ressort de retour |
| 24. | Conduit d'arrivée | 107. | butée pour ressort de vérin |
| 25. | Arbre | 108. | entrée de fluide à infuser |
| 40. | Vérin | 109. | entrée de fluide de poussée |
| 42. | Demi chambre mobile | 110. | joints |
| 45. | Conduit d'évacuation | 111. | joint |
| | | 112. | doigt pour clapet anti-retour |
| 60. | tétine | 113. | orifice d'entrée de la chambre de poussée |
| 61. | clapet anti-retour | | |
| 62. | ressort pour clapet anti-retour | 114. | piston |
| 63. | orifice pour clapet anti-retour | 115. | cylindre |
| 64. | joints de tétine | 116. | paroi du piston au regard du fond du cylindre |
| 65. | corps de tétine | | |
| | | 117. | corps du piston |
| 7. | Chambre d'infusion | 118. | cavité |
| | | 119a. | portion mâle du corps |
| 200. | réservoir | 119b. | portion femelle du corps |
| 300. | débitmètre | | |
| 400. | pompe | | |
| 500. | chaudière | 120. | clapet taré |
| 600. | électrovanne de décharge | 121. | ressort pour clapet taré |
| 800. | électrovanne de sortie | 122. | orifice d'entrée formant siège pour clapet taré |
| 900. | buse de sortie | | |
| | | 123. | alésage vertical |
| | | 124. | bouchon pour alésage vertical |
| | | | |
| 701. | branche | | |
| 702. | embranchement | | |
| 703. | branche | | |
| 704. | branche | | |
| 705. | branche | | |
| 706. | embranchement | | |
| 707. | branche | | |
| 710. | Branche de sortie | | |
| 711. | Sortie de la branche de sortie | | |
| 712. | Entrée de la branche de sortie | | |
| 713. | Embranchement | | |

## Revendications

1. Machine de production de boisson par infusion d'un produit à infuser comprenant :
• un système d'infusion (10) comprenant une chambre d'infusion (7) destinée à recevoir un produit à infuser,
• un circuit hydraulique comprenant une pompe (400) et une chaudière (500) disposée en aval de la pompe (400), des moyens d'alimentation reliant la chaudière (500) à la chambre d'infusion (7) pour alimenter la chambre d'infusion (7) en fluide chauffé,
• un clapet taré (120) disposé entre la chaudière (500) et la chambre d'infusion (7) et agencé de manière à empêcher le passage du fluide vers la chambre d'infusion (7) lorsque la pression du fluide en amont du clapet taré (120) est inférieure à un seuil de pression d'infusion et de manière à autoriser le passage du fluide vers la chambre d'infusion (7) lorsque la pression du fluide en amont du clapet taré (120) est supérieure audit seuil de pression d'infusion ,
• une branche de sortie (710) comprenant au moins une entrée (711) connectée à une sortie de la chaudière (500) ou aux moyens d'alimentation en amont du clapet taré (120) et au moins une sortie (712), la branche de sortie (710) étant configurée pour assurer l'écoulement du fluide issu de la chaudière (500) hors de la machine,
• une électrovanne de sortie (800), disposée sur la branche de sortie (710) et dont l'ouverture autorise l'écoulement du fluide par ladite sortie (712) et dont la fermeture empêche l'écoulement du fluide par ladite sortie (712)
**caractérisée en ce qu'**elle est configurée de sorte que l'activation de l'électrovanne de sortie (800) provoque le fonctionnement de la pompe (400) et le fonctionnement de la chaudière (500).

2. Machine selon la revendication précédente configurée de sorte que la fermeture de l'électrovanne de sortie (800) autorise la montée en pression du fluide dans le circuit hydraulique et de sorte que l'ouverture de l'électrovanne de sortie (800) empêche la montée en pression dans le circuit hydraulique.

3. Machine selon l'une quelconque des revendications précédentes dans laquelle la sortie de la branche de sortie (710) est équipée d'une buse (900).

4. Machine selon l'une quelconque des revendications précédentes configurée pour activer la pompe (400) par intermittence de sorte à obtenir un jet de vapeur en sortie (712) de la banche de sortie (710).

5. Machine selon l'une quelconque des revendications précédentes dans laquelle l'entrée de la branche de sortie (710) est connectée au circuit hydraulique en amont du système d'infusion (10) et en aval de la chaudière (500).

6. Machine selon l'une quelconque des revendications précédentes dans laquelle la chambre d'infusion (7) est définie par au moins une première (42) et une deuxième (22) portions de chambre d'infusion (7) mobiles l'une par rapport à l'autre, dans laquelle le système d'infusion (10) comporte un actionneur (40) configuré pour éloigner ou rapprocher les première (42) et deuxième (22) portions afin de respectivement fermer ou ouvrir la chambre d'infusion (7), et dans laquelle l'actionneur (40) est connecté à la pompe (400) pour être alimenté en fluide sous pression.

7. Machine selon la revendication précédente configurée de sorte que l'actionneur (40) provoque la fermeture de la chambre d'infusion (7) lorsque la pression du fluide alimentant l'actionneur (40) atteint un seuil de pression de fermeture.

8. Machine selon l'une quelconque des deux revendications précédentes dans laquelle le circuit hydraulique comprend une électrovanne de décharge (600) disposée en amont de l'actionneur (40) et agencée de manière que son ouverture permettre d'abaisser la pression du fluide en amont de l'actionneur (40)

9. Machine selon la revendication précédente dans laquelle l'électrovanne de décharge (600) est connectée à un réservoir (200) d'eau alimentant la pompe (40) ou à un bac de recueillement.

10. Machine selon l'une quelconque des revendications précédentes configurée de sorte que l'ouverture de l'électrovanne de sortie (800) provoque la fermeture de l'électrovanne de décharge (600).

11. Machine selon l'une quelconque des revendications précédentes configurée de manière à empêcher une montée en pression du fluide dans le circuit si l'électrovanne de décharge (600) et/ou l'électrovanne de sortie (800) est ouverte et de manière à autoriser la montée en pression du fluide dans le circuit si l'électrovanne de décharge (600) et l'électrovanne de sortie (800) sont fermées.

12. Machine selon l'une quelconque des revendications précédentes dans laquelle la chambre d'infusion (7) est fluidiquement connectée à la chaudière (500) pour recevoir du fluide chauffé et dans laquelle l'actionneur (40) n'est pas connecté à la chaudière (500) et est alimenté en fluide non chauffé.

13. Machine selon l'une quelconque des revendications précédentes prise en combinaison avec la revendication 7 dans laquelle la première portion (42) de chambre est mobile et dans laquelle la chambre d'infusion (7) est alimentée en fluide chauffé par la première portion de chambre (42).

14. Machine selon la revendication précédente dans laquelle la première portion (42) de chambre est mobile en translation et dans laquelle la deuxième portion de chambre (22) est fixe.

15. Machine selon l'une quelconque des huit revendications précédentes dans laquelle l'actionneur est un vérin (40) hydraulique comprenant un cylindre (115) et un piston (114) mobile à l'intérieur du cylindre (115), le cylindre (115) et le piston (114) définissant une chambre de poussée alimentée en fluide par la pompe, le piston (114) comportant un passage (105) dont une extrémité aval est en communication fluidique avec la chambre d'infusion (7) et dont une extrémité amont est en communication fluidique avec un canal d'alimentation (104) destiné à être connecté à la chaudière et dans laquelle le cylindre (115) comporte des moyens d'emmanchement (103) solidaires du cylindre (115), s'étendant dans la chambre de poussée (100), conformés pour coulisser à l'intérieur du piston (114) et logeant le canal d'alimentation (104).

## Patentansprüche

1. Maschine zur Herstellung von Getränken durch Infusion eines aufzugießenden Produkts, umfassend:
* ein Infusionssystem (10), umfassend eine Infusionskammer (7), die zur Aufnahme eines aufzugießenden Produkts bestimmt ist,
* einen Flüssigkeitskreislauf, umfassend eine Pumpe (400) und einen unterhalb der Pumpe (400) angeordneten Heizkessel (500), den Heizkessel (500) an die Infusionskammer (7) anschließende Versorgungsmittel zur Versorgung der Infusionskammer (7) mit erhitzter Flüssigkeit,
* eine tarierte Klappe (120), die zwischen dem Heizkessel (500) und der Infusionskammer (7) angeordnet ist und derart angeordnet ist, dass der Durchfluss der Flüssigkeit zur Infusionskammer (7) verhindert wird, wenn der Druck der Flüssigkeit oberhalb der tarierten Klappe (120) unter einem Infusionsdruck-Schwellenwert liegt und derart, dass der Durchfluss der Flüssigkeit zur Infusionskammer (7) zugelasse wird, wenn der Druck der Flüssigkeit oberhalb der tarierten Klappe (120) höher ist als der genannte Infusionsdruck-Schwellenwert,
* einen Abflusszweig (710), umfassend wenigstens einen an einen Ausgang des Heizkessels (500) oder an die Versorgungsmittel oberhalb der tarierten Klappe (120) angeschlossenen Eingang (711) und wenigstens einen Ausgang (712), wobei der Ausgangszweig (710) konfiguriert ist, um das Abfließen der aus dem Heizkessel (500) stammenden Flüssigkeit aus der Maschine zu verhindern,
* ein Ausgangsmagnetventil (800), das an dem Ausgangszweig (710) angeordnet ist und dessen Öffnung das Abfließen der Flüssigkeit durch den genannten Ausgang (712) zulässt und dessen Verschluss das Abfließen der Flüssigkeit durch den genannten Ausgang (712) verhindert
**dadurch gekennzeichnet, dass** sie derart konfiguriert ist, dass die Aktivierung des Ausgangsmagnetventils (800) den Betrieb der Pumpe (400) und den Betrieb des Heizkessels (500) hervorruft.

2. Maschine gemäß dem voranstehenden Anspruch, die derart konfiguriert ist, dass der Verschluss des Ausgangsmagnetventils (800) den Druckaufbau der Flüssigkeit in dem Flüssigkeitskreislauf derart erlaubt, dass die Öffnung des Ausgangsmagnetventils (800) den Druckaufbau in dem Flüssigkeitskreislauf ermöglicht.

3. Maschine gemäß einem der voranstehenden Ansprüche, bei der der Ausgang des Ausgangszweigs (710) mit einer Düse (900) ausgerüstet ist.

4. Maschine gemäß einem der voranstehenden Ansprüche, die konfiguriert ist, um die Pumpe (400) intermittierend derart zu aktivieren, dass ein Dampfstrahl am Ausgang (712) des Ausgangszweigs (710) erhalten wird.

5. Maschine gemäß einem der voranstehenden Ansprüche, bei der der Eingang des Ausgangszweigs (710) an den Flüssigkeitskreislauf oberhalb des Infusionssystems (10) und unterhalb des Heizkessels (500) angeschlossen ist.

6. Maschine gemäß einem der voranstehenden Ansprüche, bei der die Infusionskammer (7) durch wenigstens einen ersten (42) und einen zweiten (22), im Verhältnis zueinander mobilen Abschnitt der Infusionskammer (7) definiert ist, bei der das Infusionssystem (10) ein Stellglied (40) umfasst, das konfiguriert ist, um den ersten (42) und zweiten (22) Abschnitt einander anzunähern oder zu entfernen, um die Infusionskammer (7) jeweils zu schließen oder zu öffnen, und bei der das Stellglied (40) an die Pumpe (400) angeschlossen ist, um mit unter Druck stehender Flüssigkeit versorgt zu werden.

7. Maschine gemäß dem voranstehenden Anspruch, die derart konfiguriert ist, dass das Stellglied (40) den Verschluss der Infusionskammer (7) hervorruft, wenn der Druck der das Stellglied (40) versorgenden Flüssigkeit einen Verschlussdruck-Schwellenwert erreicht.

8. Maschine gemäß einem der zwei voranstehenden Ansprüche, bei der der Flüssigkeitskreislauf ein Ablass-Magnetventil (600) umfasst, das oberhalb des Stellgliedes (40) angeordnet ist und derart angeordnet ist, dass seine Öffnung das Absenken des Drucks der Flüssigkeit oberhalb des Stellgliedes (40) zulässt.

9. Maschine gemäß dem voranstehenden Anspruch, bei der das Ablass-Magnetventil (600) an einen die Pumpe (40) versorgenden Wassertank (200) oder an ein Auffangbecken angeschlossen ist.

10. Maschine gemäß einem der voranstehenden Ansprüche, die derart konfiguriert ist, dass das Ausgangs-Magnetventil (800) den Verschluss des Ablass-Magnetventils (600) hervorruft.

11. Maschine gemäß einem der voranstehenden Ansprüche, die derart konfiguriert ist, dass ein Druckaufbau der Flüssigkeit in dem Kreislauf verhindert wird, wenn das Ablassventil (600) und / oder das Ausgangs-Magnetventil (800) offen ist und derart, dass der Druckaufbau der Flüssigkeit in dem Kreislauf zugelassen wird, wenn das Ablass-Magnetventil (600) und das Ausgangs-Magnetventil (800) geschlossen sind.

12. Maschine gemäß einem der voranstehenden Ansprüche, bei der die Infusionskammer (7) fluidisch an den Heizkessel (500) angeschlossen ist, um erhitzte Flüssigkeit zu erhalten und bei der das Stellglied (40) nicht an den Heizkessel (500) angeschlossen ist und mit nicht erhitzter Flüssigkeit versorgt wird.

13. Maschine gemäß einem der voranstehenden Ansprüche, in Verbindung mit Anspruch 7, bei der der erste Abschnitt (42) der Kammer mobil ist und bei der die Infusionskammer (7) durch den ersten Abschnitt der Kammer (42) mit erhitzter Flüssigkeit versorgt wird.

14. Maschine gemäß dem voranstehenden Anspruch, bei der der erste Abschnitt (42) der Kammer in Translation mobil ist und bei der der zweite Abschnitt der Kammer (22) fest ist.

15. Maschine gemäß einem der acht voranstehenden Ansprüche, bei der das Stellglied ein hydraulischer Antrieb (40) mit einem Zylinder (115) und einem mobilen Kolben (114) im Innern des Zylinders (115) ist, wobei der Zylinder (115) und der Kolben (114) eine durch die Pumpe mit Flüssigkeit versorgte Schubkammer definieren, wobei der Kolben (114) einen Durchgang (105) umfasst, dessen eines Ende unterhalb in fluidischer Verbindung mit der Infusionskammer (7) steht und dessen eines Ende oberhalb in fluidischer Verbindung mit einem Versorgungskanal (104) steht, der dazu bestimmt ist, an den Heizkessel angeschlossen zu werden, und bei dem der Zylinder (115) mit dem Zylinder (115) fest verbundene Aufpressmittel (103) umfasst, die sich in der Schubkammer (100) erstrecken und angepasst sind, um im Innern des Kolbens (114) zu gleiten und den Versorgungskanal (104) aufnehmen.

## Claims

1. A machine for making beverages by infusion of a product to be infused comprising:
• an infusion system (10) comprising an infusion chamber (7) intended to receive a product to be infused,
• a hydraulic circuit comprising a pump (400) and a boiler (500) positioned downstream from the pump (400), supply means connecting the boiler (500) to the infusion chamber (7) for supplying the infusion chamber (7) with the heated fluid,
• a calibrated valve (120) positioned between the boiler (500) and the infusion chamber (7) and so arranged as to prevent the fluid from flowing into the infusion chamber (7) when the fluid pressure upstream from the calibrated valve (120) is below an infusion pressure threshold and so as to let the fluid flow into the infusion chamber (7) when the fluid pressure upstream from the calibrated valve (120) is above said infusion pressure threshold,
• an outlet branch (710) comprising at least one inlet (711) connected to an outlet of the boiler (500) or to the supplying means upstream from the calibrated valve (120) and at least one outlet (712), with the outlet branch (710) being so configured as to let the fluid from the boiler (500) flow out of the machine,
• an outlet solenoid valve (800) positioned on the outlet branch (710) and the opening of which lets the fluid flow through said outlet (712) and the closing of which prevents the fluid from flowing through said outlet (712),
**characterized in that** it is so configured that the activation of the outlet solenoid valve (800) causes the operation of the pump (400) and the operation of the boiler (500).

2. A machine according to the preceding claim, so configured that the closing of the outlet solenoid valve (800) allows the rise in pressure of the fluid in the hydraulic circuit and so that the opening of the outlet solenoid valve (800) prevents the rise in pressure in the hydraulic circuit.

3. A machine according to any one of the preceding claims, wherein the outlet of the outlet branch (710) is equipped with a nozzle (900).

4. A machine according to any one of the preceding claims, so configured as to activate the pump (400) at intervals so as to obtain a jet of steam at the outlet (712) of the outlet branch (710).

5. A machine according to any one of the preceding claims, wherein the inlet of the outlet branch (710) is connected to the hydraulic circuit upstream from the infusion system (10) and downstream from the boiler (500).

6. A machine according to any one of the preceding claims, wherein the infusion chamber (7) is defined by at least a first (42) and a second (22) portion of the infusion chamber (7) which can move relative to each other, wherein the infusion system (10) comprises an actuator (40) so configured as to move the first (42) and second (22) portions away from or closer to one another, so as to respectively close or open the infusion chamber (7), and wherein the actuator (40) is connected to the pump (400) to be supplied with pressurized fluid.

7. A machine according to the preceding claim, so configured that the actuator (40) causes the closing of the infusion chamber (7) when the pressure of the fluid supplied to the actuator (40) reaches a closing pressure threshold.

8. A machine according to any one of the preceding two claims, wherein the hydraulic circuit comprises a discharge solenoid valve (600) positioned upstream from the actuator (40) and so arranged that the opening thereof enables the reduction in the fluid pressure upstream from the actuator (40).

9. A machine according to the preceding claim, wherein the discharge solenoid valve (600) is connected to a reservoir (200) containing water supplying the pump (40) or to a collection tank.

10. A machine according to any one of the preceding claims, so configured that the opening of the outlet solenoid valve (800) causes the closing of the discharge solenoid valve (600).

11. A machine according to any one of the preceding claims, so configured as to prevent a rise in the fluid pressure in the circuit if the discharge solenoid valve (600) and/or the outlet solenoid valve (800) is open and so as to allow the rise in the fluid pressure in the circuit if the discharge solenoid valve (600) and the outlet solenoid valve (800) are closed.

12. A machine according to any one of the preceding claims, wherein the infusion chamber (7) is fluidly connected to the boiler (500) so as to receive heated fluid and wherein the actuator (40) is not connected to the boiler (500) and is supplied with unheated fluid.

13. A machine according to any one of the preceding claims, in combination with claim 7, wherein the first portion (42) of the chamber is movable and wherein the infusion chamber (7) is supplied with heated fluid by the first portion (42) of the chamber.

14. A machine according to the preceding claim, wherein the first portion (42) of the chamber is movable in translation and wherein the second portion (22) of the chamber is stationary.

15. A machine according to any one of the preceding eight claims, wherein the actuator is a hydraulic jack (40) comprising a cylinder (115) and a piston (114) which can move inside the cylinder (115), with the cylinder (115) and the piston (114) defining a thrust chamber supplied with fluid by the pump, with the piston (114) comprising a passage (105), a downstream end of which is in fluid communication with the infusion chamber (7) and an upstream end of which is in fluid communication with a feeder channel (104) intended to be connected to the boiler and wherein the cylinder (115) comprises fitting means (103) integral with the cylinder (115), extending into the thrust chamber (100) and so shaped as to slide inside the piston (114) and accommodating the feeder channel (104).
